# EUROPEAN PATENT APPLICATION

(11) **EP 4 338 644 A1**
(43) Date of publication of application: **20.03.2024**
(21) Application number: 22941856.1
(22) Date of filing: 19.10.2022
(51) Int. Cl.: A47J 36/02, C09D 5/26, C09D 7/61, C09D 7/40, C09C 1/00, C09D 201/04

(54) **COOKER HAVING THERMOCHROMIC LAYER CONTAINING THERMOCHROMIC PIGMENT FOR TEMPERATURE SENSOR THROUGH USE OF BISMUTH VANADATE AND MANUFACTURING METHOD THEREFOR**

(30) Priority: 22.07.2022 KR 20220091058
(71) Applicant: CFC Teramate Co., Ltd., Busan 46020 (KR)
(72) Inventor: MOON, Chi Won, Busan 48120 (KR); KIM, Jin Mo, Yangsan-si Gyeongsangnam-do 50654 (KR); JEON, Seung Yup, Busan 48572 (KR); LEE, Ho Jun, Gijang-gun Busan 46019 (KR); CHO, Ju Ho, Busan 48445 (KR); MIN, Ji Hye, Gijang-gun Busan 46023 (KR)
(74) Representative: Gulde & Partner
(86) International application number: PCT/KR2022/015957
(87) International publication number: WO 2024/019229

(57) **Abstract**

The present invention relates to a cooking utensil having a thermochromic layer including a thermochromic pigment for a temperature sensor using bismuth vanadate and a method for manufacturing the same. More specifically, it relates to a cooking utensil having a thermochromic layer including a thermochromic pigment for a temperature sensor using bismuth vanadate, wherein the color of the thermochromic layer of the cooking utensil is changed according to the change of the temperature from room temperature to a high temperature and wherein the color change may be visually confirmed as the difference between the CIELAB coordinate value shown at 25 °C and the CIELAB coordinate value shown at 200 °C is 20 to 25, and a method for manufacturing the same.

## Description

### TECHNICAL FIELD

The present invention relates to a cooking utensil having a thermochromic layer including a thermochromic pigment for a temperature sensor using bismuth vanadate and a method for manufacturing the same. More specifically, it relates to a cooking utensil having a thermochromic layer including a thermochromic pigment for a temperature sensor using bismuth vanadate, wherein the color of the thermochromic layer of the cooking utensil is changed according to the change of the temperature from room temperature to a high temperature and wherein the color change may be visually confirmed as the difference between the CIELAB coordinate value shown at 25 °C and the CIELAB coordinate value shown at 200 °C is 20 to 25, and a method for manufacturing the same.

### BACKGROUND ART

Toxic inorganic pigments containing heavy metals such as chromium, cadmium, and lead, which have been used in large quantities to date, are causing human hazard problems and environmental problems. Therefore, there is an increasing interest in non-toxic and eco-friendly pigments to replace inorganic pigments containing heavy metals.

Bismuth (III) vanadate (BiVO₄) is recognized as an effective alternative, because it is an inorganic pigment that is non-toxic to the ecosystem and that has excellent yellow pigment characteristics with high chemical stability. In addition, when compared to organic pigments, it has excellent performance compared to the price with high durability, and thus is widely applied to paints, plastics, and rubbers.

To date, research on the production of bismuth vanadate pigments has been actively conducted worldwide, and they are applied to various fields ranging from pigment production to paint marking compositions.

Thermochromic property is a property that color change is caused by changes in physical properties in a specific temperature range, and bismuth (III) vanadate (BiVO₄) is known as a representative compound with thermochromic properties. Bismuth vanadate is a representative yellow inorganic pigment and is used in replace of toxic yellow pigments containing heavy metals such as cadmium or lead.

The thermochromic mechanism of bismuth vanadate is due to a temperature-induced phase transition (monoclinic scheelite - tetragonal scheelite), and at the phase transition temperature of 255 °C, it undergoes a phase transition from a monoclinic structure to a tetragonal structure. As a result, the color is changed from yellow to orange, and this color change is reversible.

Meanwhile, in order to use a pigment to prevent a user from getting burned by a heat source, the user must visually clearly recognize whether the color is changed due to a temperature change. However, commercially available bismuth vanadate has a disadvantage that it is not suitable for use in the above application because the color contrast is not large enough for a user to visually perceive the color change in a temperature range from room temperature to 200 °C.

### DETAILED DESCRIPTION OF THE INVENTION

### TECHNICAL PROBLEM

The present invention is intended to solve the problem described above, and the object of the present invention is to provide a cooking utensil having a thermochromic layer including a thermochromic pigment for a temperature sensor using bismuth vanadate, wherein a color change occurs in a temperature range about 200 °C and wherein the color change may be visually confirmed, and a method for manufacturing the same.

The technical problems intended to be solved by the present invention are not limited to the technical problems mentioned above, and other technical problems that are not mentioned will be clearly understood by those skilled in the art from the description of the present invention.

### TECHNICAL SOLUTION

To achieve the above object, the present invention provides a cooking utensil having a thermochromic layer including a thermochromic pigment for a temperature sensor using bismuth vanadate and a method for manufacturing the same.

Hereinafter, this present specification will be described in more detail.

The present invention provides a cooking utensil having a thermochromic layer including a thermochromic pigment for a temperature sensor, comprising: a metal substrate; a primer layer including a fluorine-based resin formed on a surface of the metal substrate; a thermochromic layer including a thermochromic pigment formed on at least a part of a surface of the primer layer; and a top coating layer including a curing agent formed on surfaces of the primer layer and the thermochromic layer, wherein the thermochromic pigment is a thermochromic pigment for a temperature sensor using bismuth vanadate.

In the present invention, the thermochromic layer of the cooking utensil reversibly undergoes a color change within a temperature range from room temperature to 200 °C, and the color difference between the color exhibited at room temperature and the color exhibited at 200 °C on CIELAB coordinates is 20 to 25.

In the present invention, the thermochromic pigment of the thermochromic layer has an average particle size of 0.1 to 25 µm.

In addition, the present invention provides a method for manufacturing a cooking utensil having a thermochromic layer including a thermochromic pigment for a temperature sensor, comprising the following steps:

Forming a primer layer including a fluorine-based resin on a surface of a metal substrate; forming a thermochromic layer by applying a thermochromic aqueous dispersion including a thermochromic pigment onto at least a part of a surface of the primer layer; and forming a top coating layer by applying a top coating agent on a surface of the primer layer on which the thermochromic layer is formed and performing heat treatment.

In the present invention, the thermochromic layer includes 5 to 100 parts by weight of a thermochromic pigment based on 100 parts by weight of a fluorine-based resin, and the thermochromic pigment includes bismuth vanadate.

### ADVANTAGEOUS EFFECTS

By the above technical solution, the cooking utensil having a thermochromic layer including a thermochromic pigment and a method for manufacturing the same can provide a cooking utensil in which the color is reversibly changed from room temperature to a high temperature and a color change at a high temperature can be confirmed due to an excellent color contrast effect at a specific temperature, and a method for manufacturing the same.

The effects of the present invention are not limited to the effects mentioned above, and other effects that are not mentioned will be clearly understood by those skilled in the art from the claims.

### DESCRIPTION OF THE DRAWINGS

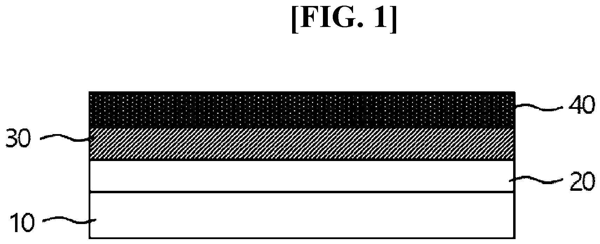

FIG. 1 is a schematic image showing a cooking utensil including a metal substrate, a primer layer, a thermochromic layer, and a coating layer according to the present invention.
FIG. 2 is a flowchart showing a method for manufacturing a cooking utensil having a thermochromic layer including a thermochromic pigment for a temperature sensor according to the present invention.
FIG. 3 is an image showing a color exhibited at 25 °C and a color exhibited at 180 °C by a thermochromic pigment used in a thermochromic layer manufactured according to Example 1 of the present invention.
FIG. 4 is an image showing a color exhibited at 25 °C and a color exhibited at 200 °C by a thermochromic pigment used in thermochromic layers manufactured according to Example 1 and Comparative Examples 1 and 2 of the present invention.
FIG. 5 is an image showing a color exhibited at 25 °C and a color exhibited at 200 °C by a thermochromic pigment used in a thermochromic layer manufactured according to Example 2 of the present invention.

### BEST MODE

The terms used in the present specification have been selected from general terms that are currently widely used as much as possible while considering the functions in the present invention, but they may vary depending on the intention of one of ordinary skill in the art or a precedent, the emergence of new technologies, and the like. In addition, in a specific case, there is also a term arbitrarily selected by the applicant, and in this case, the meaning will be described in detail in the detailed description of the invention. Therefore, the terms used in the present invention should be defined based on the meaning of the terms and the overall content of the present invention, not simply the title of the terms.

Unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in the present application, they should not be interpreted in an ideal or excessively formal meaning.

Numerical ranges include the values defined therein. Every maximum numerical limitation given throughout this specification includes every lower numerical limitation, as if such lower numerical limitations were explicitly written. Every minimum numerical limitation given throughout this specification includes every higher numerical limitation, as if such higher numerical limitations were explicitly written. Every numerical limitation given throughout this specification will include every better numerical range within the broader numerical range, as if the narrower numerical limitations were explicitly written.

Hereinafter, embodiments of the present invention will be described in detail, but it is obvious that the present invention is not limited by the following embodiments.

Hereinafter, preferred embodiments of the present invention will be described in detail with reference to the attached drawings.

### A cooking utensil having a thermochromic layer including a thermochromic pigment for a temperature sensor

The present invention provides a cooking utensil having a thermochromic layer including a thermochromic pigment for a temperature sensor, comprising: a metal substrate; a primer layer including a fluorine-based resin formed on at least a part of a surface of the metal substrate; a thermochromic layer including a thermochromic pigment formed on at least a part of a surface of the primer layer; and a top coating layer including a curing agent formed on surfaces of the primer layer and the thermochromic layer, wherein the thermochromic pigment is a thermochromic pigment for a temperature sensor including a bismuth vanadate pigment.

The thermochromic layer may be reversible depending on the temperature. In the present invention, being 'reversible' means that the color is changed when the temperature is elevated and the color is recovered to the original color when the temperature is lowered again.

The thermochromic layer of the cooking utensil may exhibit a specific color (hereinafter referred to as `room temperature color') at room temperature or in an ambient temperature range of 20 to 25 °C, but as the temperature is elevated by heating the cooking utensil, the color may be changed to exhibit a color that is different from the room temperature color. More specifically, when ten temperature is elevated to 180 to 250 °C, it may exhibit a different color compared to the room temperature color and may exhibit a color that is different from even a color exhibited in a temperature range of 90 to 170 °C.

The thermochromic layer of the cooking utensil may reversibly undergo a color change within a temperature range from room temperature to 200°C, and the color difference between a color exhibited at room temperature and a color exhibited at 200 °C on CIELAB coordinates may be 20 to 25.

The term "CIELAB" used in the present invention refers to a color space defined by CIE based on the opponent color theory of yellow-blue and green-red through which humans perceive colors, as a result of a research to approach human sensibility.

The thermochromic pigment of the thermochromic layer may have an average particle size of 0.1 to 100 µm, more preferably 0.1 to 25 µm.

When the particle size is smaller or larger than the above average particle size, a thermal color change depending on the temperature may be small.

### A method for manufacturing a cooking utensil having a thermochromic layer including a thermochromic pigment for a temperature sensor

The present invention provides a method for manufacturing a cooking utensil having a thermochromic layer including a thermochromic pigment for a temperature sensor, comprising the following steps:

The cooking utensil having a thermochromic layer including a thermochromic pigment for a temperature sensor may comprise: a metal substrate; a primer layer including a fluorine-based resin formed on at least a part of a surface of the metal substrate; a thermochromic layer including a thermochromic pigment formed on at least a part of a surface of the primer layer; and a top coating layer including a curing agent formed on surfaces of the primer layer and the thermochromic layer, wherein the thermochromic pigment is a thermochromic pigment for a temperature sensor including a bismuth vanadate pigment.

The thermochromic layer may be reversible depending on the temperature. In the present invention, being 'reversible' means that the color is changed when the temperature is elevated and the color is recovered to the original color when the temperature is lowered again.

The thermochromic layer of the cooking utensil may exhibit a specific color (hereinafter referred to as `room temperature color') at room temperature or in an ambient temperature range of 20 to 25 °C, but as the temperature is elevated by heating the cooking utensil, the color may be changed to exhibit a color that is different from the room temperature color. More specifically, when ten temperature is elevated to 180 to 250 °C, it may exhibit a different color compared to the room temperature color and may exhibit a color that is different from even a color exhibited in a temperature range of 90 to 170 °C.

The thermochromic layer of the cooking utensil may reversibly undergo a color change within a temperature range from room temperature to 200 °C, and the color difference between a color exhibited at room temperature and a color exhibited at 200 °C on CIELAB coordinates may be 20 to 25.

The term "CIELAB" used in the present invention refers to a color space defined by CIE based on the opponent color theory of yellow-blue and green-red through which humans perceive colors, as a result of a research to approach human sensibility.

The thermochromic pigment of the thermochromic layer may have an average particle size of 0.1 to 100 µm, more preferably 0.1 to 25 µm.

When the particle size is smaller or larger than the above average particle size, a thermal color change depending on the temperature may be small.

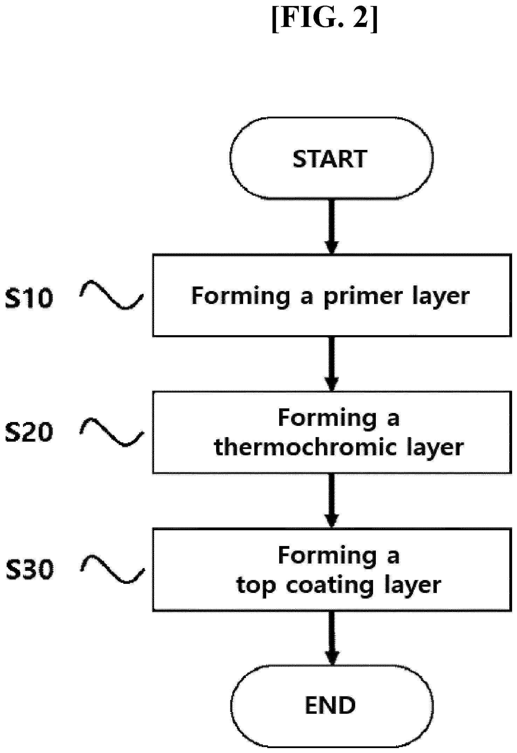

FIG. 2 is a flowchart showing a method for manufacturing a cooking utensil having a thermochromic layer including a thermochromic pigment for a temperature sensor according to the present invention. Referring to FIG. 2, the method for manufacturing a cooking utensil comprises: (S10) forming a primer layer; (S20) forming a thermochromic layer; and (S30) forming a top coating layer. More specifically, the method for manufacturing a cooking utensil having a thermochromic layer including a thermochromic pigment for a temperature sensor comprises: (S10) forming a primer layer including a fluorine-based resin on a surface of a metal substrate; (S20) forming a thermochromic layer by applying a thermochromic aqueous dispersion including a thermochromic pigment onto at least a part of a surface of the primer layer; and (S30) forming a top coating layer by applying a top coating agent on a surface of the primer layer on which the thermochromic layer is formed and performing heat treatment.

The thermochromic layer may include 5 to 100 parts by weight of a thermochromic pigment, more preferably 10 to 50 parts by weight, based on 100 parts by weight of a fluorine-based resin, and the thermochromic pigment may include bismuth vanadate.

Advantages and features of the present invention and methods for achieving them will become clear with reference to the embodiments described below in detail. However, the present invention is not limited to the embodiments disclosed below, but may be implemented in various different forms. The embodiments are provided only for making the disclosure of the present invention complete and fully informing to one of ordinary skill in the art the scope of the invention, and the present invention is only defined by the scope of the claims.

### [Example 1]

In Example 1, the thermochromic pigment including bismuth vanadate used in a thermochromic layer of the present invention was prepared by the method described below.

0.003 mole of ammonium metavanadate (NH₄VO₃) was added to 100 ml of water (H₂O), and 0.003 mole of bismuth (III) nitrate pentahydrate (Bi(NO₃)₃•5H₂O) was added to 40 ml of water (H₂O) to prepare a vanadium precursor solution and a bismuth precursor solution. The vanadium precursor solution and the bismuth precursor solution were mixed at a molar ratio of 1:1 and stirred at 70 °C for 120 hours to form a precipitate including vanadium and bismuth. The precipitate was filtered using filter paper, washed three times with water, and then dried at 85 °C for 24 hours. The dried precipitate was heat-treated at 550 °C for 5 hours, pulverized, and filtered through a sieve with a size of 25 µm to prepare a thermochromic pigment with a particle size of less than 25 µm.

### [Example 2]

In Example 2, a cooking utensil having a thermochromic layer including the thermochromic pigment including the bismuth vanadate prepared in Example 1 of the present invention was manufactured by the method described below.

A surface of an aluminum plate was coated with a primer including a fluorine-based resin, which was dried at 160 °C to form a primer layer with a black background color. Thereafter, 30 parts by weight of the thermochromic pigment prepared as in Example 1 were mixed with 100 parts by weight of a fluorine resin solution to prepare a coating solution, which was used to coat the aluminum plate on which the primer layer was formed and then heat-treated at 380 °C to form a thermochromic layer. A surface of the aluminum plate on which the thermochromic layer was formed was coated with a fluorine resin for top coating, which was heat-treated at 380 °C to manufacture a cooking utensil having a thermochromic layer including a thermochromic pigment for a temperature sensor.

### [Comparative Example 1]

In Comparative Example 1, a thermochromic pigment was prepared by further performing secondary pulverization of the particles with an average particle size of less than 25 µm obtained by carrying out all the same procedures as Example 1.

### [Comparative Example 2]

In Comparative Example 2, all the same procedures as Example 1 were conducted but a thermochromic pigment with an average particle size of 25 µm or more was prepared.

### Experimental Example 1. Thermochromic analysis of the thermochromic pigment depending on the temperature

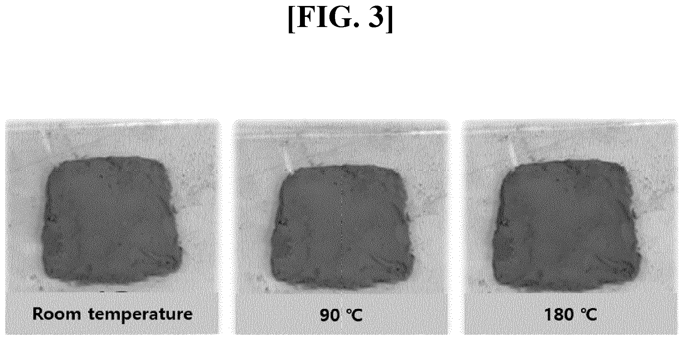

To confirm the thermal color change of the thermochromic layer including the thermochromic layer according to the present invention depending on the temperature, images of the thermochromic layer used in the thermochromic layer of the present invention prepared in Example 1 were taken at (a) room temperature (25 °C), (b) 90 °C, and (c) 180 °C, and are shown in FIG. 3.

As shown in FIG. 3, it can be confirmed that (a) the thermochromic pigment (Example 1) in an unheated state at room temperature exhibited yellow, and (b) when the temperature was elevated to 90 °C, it exhibited orange, and (c) when the temperature was elevated to 180 °C, it exhibited red.

From the above results, it can be confirmed that the thermochromic layer of the cooking utensil according to the present invention undergoes a color change depending on the temperature.

### Experimental Example 2. Thermochromic analysis depending on the particle size of the thermochromic pigment

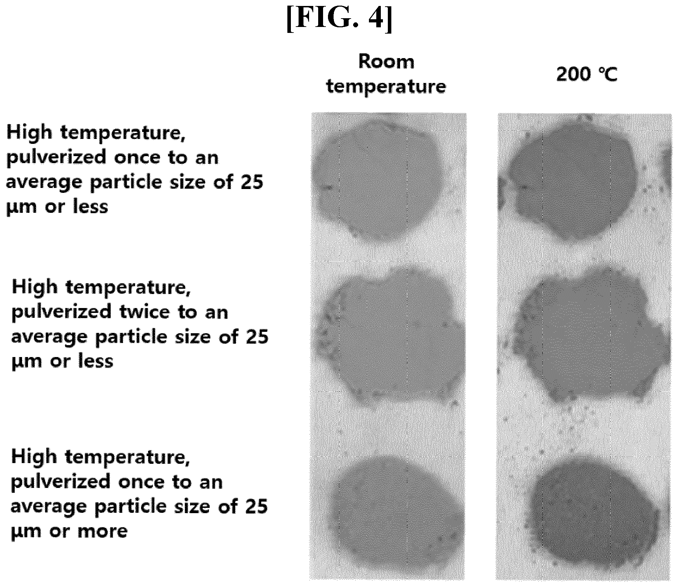

To confirm whether the most suitable average particle size of the thermochromic pigment used in the thermochromic layer according to the present invention is 1 to 25 µm, images of the thermochromic pigment used in the thermochromic layers prepared by Example 1 and Comparative Examples 1 and 2 were taken at (a) room temperature (25 °C) and (b) 200 °C, and are shown in FIG. 4.

As shown in FIG. 4, in the case of the thermochromic pigment (Example 1) used in the thermochromic layer of the present invention, when the temperature was elevated from room temperature to 200 °C, the color difference exhibited in the CIELAB coordinate value was 29.9, showing a large color difference. On the other hand, in the case of the comparative thermochromic pigment 1 (Comparative Example 1), when the temperature was elevated from room temperature to 200 °C, the color difference exhibited in the CIELAB coordinate value was 24.0, and in the case of the comparative thermochromic pigment 2 (Comparative Example 2), when the temperature was elevated from room temperature to 200 °C, the color difference exhibited in the CIELAB coordinate value was 25.0. Therefore, it can be confirmed that Comparative Examples 1 and 2 showed a small color difference compared to Example 1.

From the above results, it can be seen that the most suitable particle size of the thermochromic pigment used in the thermochromic layer of the cooking utensil according to the present invention is 0.1 to 25 µm.

### Experimental Example 3. Thermochromic analysis of a cooking utensil having a thermochromic layer including a thermochromic pigment for a temperature sensor depending on the temperature

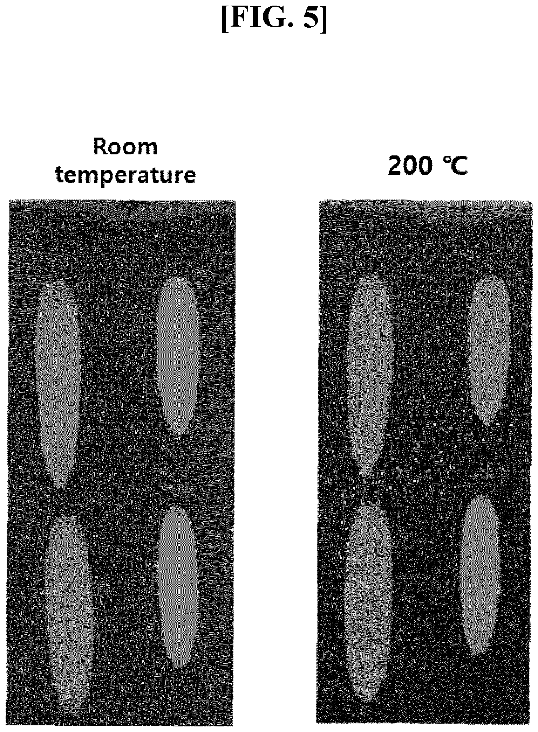

To confirm thermal color change depending on the temperature of the cooking utensil having a thermochromic layer including a thermochromic pigment according to the present invention, images of the cooking utensil having the thermochromic layer of the present invention prepared in Example 2 were taken at (a) room temperature (25 °C) and (b) 200 °C, and are shown in FIG. 5.

As shown in FIG. 5, it can be confirmed that (a) the thermochromic layer in an unheated state at room temperature exhibited yellow, and (b) when the temperature was elevated to 200 °C, it exhibited red.

From the above results, it can be confirmed that the thermochromic layer of the cooking utensil according to the present invention undergoes a color change depending on the temperature.

From the above description, those skilled in the art pertaining to the present invention will be able to understand that the present invention can be implemented in other specific forms without changing the technical principles or essential features of the present invention. In this regard, the embodiments described above are illustrative in all respects, and should be understood as non-limiting.

## Claims

1. A cooking utensil having a thermochromic layer including a thermochromic pigment for a temperature sensor, comprising:
a metal substrate;
a primer layer including a fluorine-based resin formed on at least a part of a surface of the metal substrate;
a thermochromic layer including a thermochromic pigment formed on at least a part of a surface of the primer layer; and
a top coating layer including a curing agent formed on surfaces of the primer layer and the thermochromic layer,
wherein the thermochromic pigment is a thermochromic pigment for a temperature sensor using bismuth vanadate.

2. The cooking utensil having a thermochromic layer including a thermochromic pigment for a temperature sensor according to claim 1, wherein the thermochromic layer of the cooking utensil reversibly undergoes a color change within a temperature range from room temperature to 200 °C, and a difference between a CIELAB coordinate value exhibited at 25 °C and a CIELAB coordinate value exhibited at 200 °C is 20 to 25.

3. The cooking utensil having a thermochromic layer including a thermochromic pigment for a temperature sensor according to claim 1, wherein the thermochromic pigment of the thermochromic layer has an average particle size of 0.1 to 25 µm.

4. A method for manufacturing a cooking utensil having a thermochromic layer including a thermochromic pigment for a temperature sensor, comprising:
forming a primer layer including a fluorine-based resin on a surface of a metal substrate;
forming a thermochromic layer by applying a thermochromic aqueous dispersion including a thermochromic pigment onto at least a part of a surface of the primer layer; and
forming a top coating layer by applying a top coating agent on a surface of the primer layer on which the thermochromic layer is formed and performing heat treatment,
wherein the thermochromic pigment is a thermochromic pigment for a temperature sensor using bismuth vanadate.

5. The method for manufacturing a cooking utensil having a thermochromic layer including a thermochromic pigment for a temperature sensor according to claim 4, wherein the thermochromic layer includes 5 to 100 parts by weight of a thermochromic pigment based on 100 parts by weight of a fluorine-based resin, and the thermochromic pigment includes bismuth vanadate.
